# EUROPÄISCHE PATENTSCHRIFT

(11) **EP 1 095 107 B1**
(45) Veröffentlichungstag und Bekanntmachung des Hinweises auf die Patenterteilung: **13.02.2008**
(21) Anmeldenummer: 99929249.3
(22) Anmeldetag: 17.06.1999
(51) Int. Cl.: C09D 1/00, C03C 17/00, C09K 3/18, C08J 7/06

(54) **WASSERSPREITEND BESCHICHTETE FORMKÖRPER UND DEREN VERWENDUNG**
WATER-DISPERSING COATED SHAPED BODIES AND THEIR UTILIZATION
CORPS MOULES MUNIS D'UN REVETEMENT A EFFET DISPERSIF DANS L'EAU ET LEUR UTILISATION

(30) Priorität: 30.06.1998 DE 19829165
(43) Veröffentlichungstag der Anmeldung: 02.05.2001
(73) Patentinhaber: Bayer MaterialScience AG, 51368 Leverkusen (DE)
(72) Erfinder: BIER, Peter, D-47800 Krefeld (DE); CAPELLEN, Peter, D-47803 Krefeld (DE); NISING, Wolfgang, D-53757 St. Augustin (DE)
(86) Internationale Anmeldenummer: PCT/EP1999/004183
(87) Internationale Veröffentlichungsnummer: WO 2000/000555

(56) Entgegenhaltungen:
- WO-A-96/18691
- WO-A-98/03607
- PATENT ABSTRACTS OF JAPAN vol. 097, no. 003, 31. März 1997 (1997-03-31) & JP 08 292301 A (NISSAN MOTOR CO LTD), 5. November 1996 (1996-11-05)
- PATENT ABSTRACTS OF JAPAN vol. 011, no. 080 (C-409), 11. März 1987 (1987-03-11) & JP 61 235468 A (KASHIYUU KK), 20. Oktober 1986 (1986-10-20)

## Beschreibung

Die vorliegende Erfindung betrifft beschichtete Formkörper mit einer wasserspreitenden Beschichtung und deren Verwendung.

Unter dem Begriff "wasserspreitend" wird die Eigenschaft einer Oberfläche verstanden, mit einem darauf aufgebrachten Wassertropfen einen Randwinkel unter 20 Grad zu bilden. Eine wasserspreitende Beschichtung ist demgemäß eine Beschichtung, die diese Eigenschaft einer Oberfläche herbeiführt.

Formkörper mit einer wasserspreitenden Oberfläche haben die Eigenschaft, daß sich Wasser, welches auf ihre Oberfläche gerät, dort nicht zu voneinander getrennten Tropfen zusammenzieht, sondern daß sich die Tropfen ausbreiten und bei Berührung zu einer geschlossenen Schicht zusammenfließen. Dadurch werden eine verbesserte Lichtreflexion an der mit Wasser befeuchteten Oberfläche und eine bessere Lichtdurchlässigkeit bei durchsichtigen Formkörpern erreicht. Außerdem wird das Abtropfen von Wasser von der Unterseite des Formkörpers erschwert. Diese die Tropfenbildung hemmenden sogenannten Antidrop-Eigenschaften werden insbesondere für verschiedene Verglasungsmaterialien aus anorganischen Gläsern (im folgenden kurz Glas genannt) oder aus thermoplastischen Kunststoffen verlangt. Es ist dort erwünscht, daß das sich daran abscheidendes Kondenswasser oder Niederschlagswasser nicht tropfenförmig abfällt, sondern daß es, dem Gefälle des Materials folgend, in einer geschlossenen Schicht oder wenigstens in zusammenhängenden Bahnen am unteren Rand abfließt.

Das gegenteilige Verhalten zu einer wasserspreitenden Oberfläche zeigt die wasserabstoßende Oberfläche. Auf wasserabstoßenden Oberflächen zieht sich Wasser, das auf eine solche Oberfläche gerät, zu voneinander getrennten Tropfen zusammen.

Aus der Literatur sind zahlreiche Versuche bekannt, wasserabstoßende Kunststoffoberflächen mit wasserspreitenden Schichten zu versehen. Nach DE-A 21 61 645 werden derartige Beschichtungen aus einem Mischpolymerisat aus Alkylestern, Hydroxyalkylestem und quartären Aminoalkylestern der Acryl- oder Methacrylsäure und Methylolethern des Methacrylamids als Vernetzungsmittel erzeugt. Sie nehmen zunächst unter Quellung Wasser auf und gehen allmählich in einen wasserspreitenden Zustand über. Infolge der Quellung wird die Beschichtung jedoch weich und empfindlich gegen mechanische Beschädigung.

DE 3917535 beschreibt ein Verfahren zur Herstellung kratzfester Materialien und eine hydrolysierte bzw. kondensierte Zusammensetzung auf der Grundlage hydrolysierbarer Lithium-Verbindungen auf einem Substrat.

Um eine höhere mechanische Beständigkeit zu erreichen, wurden Beschichtungen mit hydrophilen anorganischen Bestandteilen in einem hydrophilen Bindemittel entwickelt. Nach JP-A 51-81 877 werden Polyvinylchloridfolien oder Polymethylmethacrylatfolien mit einer Beschichtung aus kolloidalem Aluminiumoxid als hydrophilierendem, hartem Inhaltsstoff und Polyvinylalkohol und Ammoniumpolyacrylat als Bindemittel überzogen. Auch diese Beschichtung ist jedoch im wassergequollenen Zustand empfindlich gegenüber mechanischen Belastungen.

Es wurde auch schon versucht, benetzungsfreundliche Mittel in das Kunststoffmaterial, aus dem der Formkörper hergestellt wird, selbst einzuarbeiten. So werden wasserspreitende Abdeckungen für Gewächshäuser und ähnliche Feuchträume nach DE-A 2 017 002 aus einem Kunststoff, der oberflächenaktive Mittel, wie Polyalkylenglykol enthält, hergestellt. Die wasserspreitende Wirkung dieses Zusatzes ist nicht ausreichend. Auch wird die Witterungsbeständigkeit des Kunststoffes beeinträchtigt.

In JP-A 51-06 193 werden als Verglasungsmittel Polymethacrylatplatten mit einer Beschichtung aus 95 Teilen kolloidalem Siliciumdioxid und 5 Teilen einer Dispersion eines hydrophoben Acrylharzes vorgeschlagen. Die Haftung dieser Beschichtung ist jedoch völlig unbefriedigend. Dies gilt vor allem für den feuchten Zustand.

Eine bessere Haftung einer wasserspreitenden Beschichtung auf Kunststofformkörpern wird nach EP-A 51 405 mit einem aus zwei Schichten aufgebauten Überzug erreicht, wobei beide Schichten kolloidales Siliciumdioxid, ein teilhydrolysiertes Polysiloxan und Polyvinylalkohol als Bindemittel enthalten. In der unteren Schicht ist das Verhältnis von Silicium zu Kohlenstoff größer als in der äußeren Schicht.

Verallgemeinernd läßt sich feststellen, daß sich mit stark hydrophilen Überzugsmaterialien zwar meist eine Beschichtung mit guter Wasserspreitung erreichen läßt, in aller Regel aber die Beschichtung in gequollenem Zustand zu weich ist. Wenn man diesem Nachteil durch eine stärkere Vernetzung oder geringere Hydrophilie entgegenwirken will, so geht mit der mechanischen Empfindlichkeit zugleich die wasserspreitende Wirkung zurück. Siliciumdioxid und verschiedene andere Oxide von Metallen oder Halbmetallen vereinigen zwar die Vorteile großer Härte und guter Benetzbarkeit durch Wasser ohne zu quellen, haben aber den Nachteil, daß sie überhaupt nicht haften.

In dem Maße, wie zur Verankerung der Oxide auf der Kunststoffoberfläche Bindemittel verwendet werden, geht die Benetzbarkeit der Oxide und damit die wasserspreitende Wirkung der Beschichtung zurück, und es treten die Nachteile der Bindemittel hervor: mechanische Empfindlichkeit im Falle hydrophiler Bindemittel und ungenügende Wasserspreitung im Falle hydrophober Bindemittel.

In DE-A 34 00 079 wurde vorgeschlagen, eine im wesentlichen ganz aus Siliciumdioxid oder anderen Metalloxiden kolloidaler Teilchengröße bestehende, wasserspreitende Schicht, die selbst eine ungenügende Haftfestigkeit an der Kunststoffschicht hat, mittels einer haftvermittelnden Schicht aus einem in Wasser nicht löslichen und im wesentlichen nicht quellbaren organischen Polymeren mit polaren Gruppen an die wasserabstoßende Oberfläche eines Kunststofformkörpers fest haftend zu binden.

Die Verwendung dieser haftvermittelnden Schicht oder anderer sogenannter Primerschichten zur besseren Verbindung der wasserspreitenden Schicht mit der Kunststoffoberfläche macht einen zusätzlichen Verfahrensschritt bei der Beschichtung erforderlich, wodurch die Herstellung von beschichteten Formkörpern komplizierter und aufwendiger wird.

Alle genannten Beschichtungsmittel weisen den Nachteil auf, daß sie aus organischen Lösungsmitteln aufgetragen werden müssen.

Der vorliegenden Erfindung liegt die Aufgabe zugrunde, wasserspreitend beschichtete Formkörper bereitzustellen, wobei die Beschichtung eine ausgezeichnete Haftfestigkeit ohne Haftvermittlerschicht bei gleichzeitiger hoher mechanischer Festigkeit aufweist.

Erfindungsgemäß wird diese Aufgabe gelöst durch beschichtete Formkörper erhältlich durch Beschichten eines Teils der Formkörperoberfläche oder der gesamten Formkörperoberfläche mit einem Beschichtungsmittel enthaltend
A) 0,005 bis 2 Gewichtsteile einer Verbindung repräsentiert durch die allgemeine Formel (1) 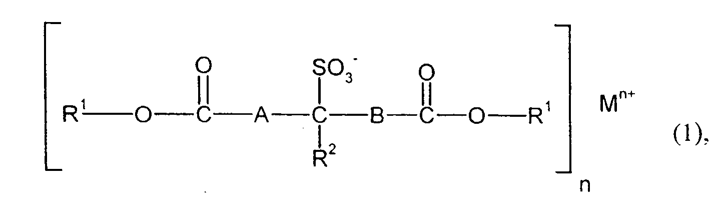 worin
   - R¹: ein Kohlenwasserstoffrest mit 1 bis 30 C-Atomen,
   - R²: Wasserstoff oder ein Kohlenwasserstoffrest mit 1 bis 6 C-Atomen,
   - A: eine Einfachbindung oder ein divalenter Kohlenwasserstoffrest mit 1 bis 30 C-Atomen,
   - B: eine Einfachbindung oder ein divalenter Kohlenwasserstoffrest mit 1 bis 30 C-Atomen,
   - n: 1, 2, 3 oder 4 und
   - Mⁿ⁺: ein n-fach-positiv geladenes Kation ist,
B) 1 bis 20 Gewichtsteile eines wasserunlöslichen Oxides oder mehrerer wasserunlöslicher Oxide eines Metalls oder eines Halbmetalls,
C) 80 bis 100 Gewichtsteile eines Gemisches einer Säure und Wasser, das zu mehr als 90 % aus Wasser besteht,
mit der Maßgabe, daß der pH-Wert des Beschichtungsmittels kleiner als 6 ist.

Die beschriebenen beschichteten Formkörper sind somit Gegenstand der vorliegenden Erfindung. Ein weiterer Gegenstand der vorliegenden Erfindung ist die Verwendung der erfindungsgemäßen beschichteten Formkörper als Verglasungsmaterial oder als Bestandteil von Automobilen, Gewächshäusern, Schwimmhallen, Stadien, Bahnhöfen, Fabrikhallen, Dachabdeckungen, Wänden, Leuchtenabdeckungen, Architekturverglasungen, Lichtkuppeln, Visieren, Brillen, Grafiken, Reklametafeln, Displays, Verpackungen oder von Scheiben für Fortbewegungsmittel aller Art.

Die erfindungsgemäßen beschichteten Formkörper weisen eine ausgezeichnete Haftfestigkeit der Beschichtung bei gleichzeitiger hoher mechanischer Festigkeit auf. Haftvermittlerschichten werden nicht benötigt. Ein weiterer Vorteil der erfindungsgemäß beschichteten Formkörper liegt darin, daß das Beschichtungsmittel überwiegend Wasser und damit nur geringe Mengen an organischen Lösungsmitteln enthält. Dies hat ökonomische und ökologische Vorteile zur Folge.

Bei den durch die allgemeine Formel (1) repräsentierten Verbindungen, die als Komponente A des erfindungsgemäßen Beschichtungsmittels eingesetzt werden, handelt es sich um Sulfondicarbonsäurediester. Diese werden entweder als freie Säure (d.h. n = 1 und Mⁿ⁺ = H⁺) oder als Salze eingesetzt. Falls die Salze eingesetzt werden, können dies die Salze beliebiger Kationen sein. Beispielsweise seien genannt: Elementkationen, organische oder anorganische Molekülkationen oder organische oder anorganische Komplexkationen. Auch Gemische verschiedener Kationen können verwendet werden.

Bevorzugte Verbindungen gemäß der allgemeinen Formel (1) sind Verbindungen repräsentiert durch die allgemeine Formel (2) 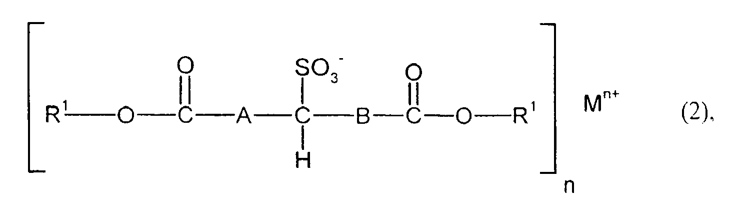 worin
- R¹: ein aliphatischer Kohlenwasserstoffrest mit 1 bis 30 C-Atomen,
- A: eine Einfachbindung oder ein divalenter aliphatischer Kohlewvasserstoffrest mit 1 bis 3 C-Atomen,
- B: eine Einfachbindung oder ein divalenter aliphatischer Kohlenwasserstoffrest mit 1 bis 3 C-Atomen,
- n: 1 oder 2 und
- Mⁿ⁺: ein n-fach-positiv geladenes Kation ist.

Besonders bevorzugte Verbindungen gemäß der allgemeinen Formel (1) sind Verbindungen repräsentiert durch die allgemeine Formel (3) 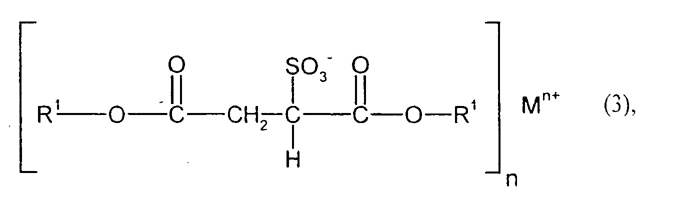 worin
- R¹: ein aliphatischer Kohlenwasserstoffrest mit 1 bis 30 C-Atomen,
- n: 1 oder 2 und
- Mⁿ⁺: ein n-fach-positiv geladenes Kation ist.

Unter diesen sind die Alkalisalze oder die Erdalkalisalze oder deren Gemische bevorzugt. Ganz besonders bevorzugt sind Alkalisalze. Als Beispiel sei Sulfonbernsteinsäure-bis-(2-ethylhexylester)-Natriumsalz genannt.

Die durch die allgemeine Formel (1) repräsentierten Verbindungen können nach bekanntem Verfahren hergestellt werden. Zum Teil sind sie kommerziell erhältlich.

Die durch die allgemeine Formel (1) repräsentierten Verbindungen können als Reinsubstanz oder als Lösung in einem beliebigen Lösungsmittel oder Lösungsmittelgemisch zur Herstellung der Beschichtungsmittel eingesetzt werden. Bevorzugt werden sie als Lösung eingesetzt. Beispielsweise kann das Handelsprodukt Dapro^{®} U99 der Firma Daniel Products Company, Inc., New Jersey, USA eingesetzt werden. Hierbei handelt es sich um eine Lösung von 40 g Sulfonbernsteinsäure-bis-(2-ethylhexylester)-Natriumsalz in 43 g 2-Butoxyethanol, 4 g Ethanol, 3 g Wasser und 10g Polyethylenglykol-Fettsäureester (Gemisch basierend im wesentlichen auf Polyethylenglykol-Ölsäureester, Polyethylenglykol-Palmitinsäureester und folyethylenglykol-Stearinsäureester).

Falls die durch die allgemeine Formel (1) repräsentierte Verbindung als Lösung zur Herstellung des erfindungsgemäßen Beschichtungsmittels eingesetzt wird, hat dies zur Folge, daß das Beschichtungsmittel über die genannten drei Komponenten A, B und C hinaus noch weitere Stoffe, nämlich die Lösungsmittel der Lösung von A, enthält. Die Lösung der durch die allgemeine Formel (1) repräsentierten Verbindung soll bevorzugt eine Konzentration von 5 bis 95 Gew.-%, besonders bevorzugt 10 bis 90 %, ganz besonders bevorzugt 20 bis 60 %, haben.

Als erfindungsgemäße wasserunlösliche Oxide eines Metalls oder eines Halbmetalls werden bevorzugt Oxide von Elementen der 3. oder 4. Hauptgruppe oder der 2., 3., 4., 5., 6., 7. oder 8. Nebengruppe des Periodensystems der Elemente eingesetzt. Beispielhaft seien genannt: Aluminiumoxid, Siliciumdioxid, Titanoxid, Ceroxid, Zinkoxid, Zinnoxid, Chromoxid, Indiumoxid,Zirkonoxid und Eisenoxide sowie Pigmente, insbesondere transparente Pigmente. Die erfindungsgemäßen Oxide können geringe Mengen anderer Elemente als Dotierungsmittel enthalten.

Besonders bevorzugt werden Oxide eines Metalls oder eines Halbmetalls der 3. oder 4. Hauptgruppe des Periodensystems der Elemente eingesetzt. Beispielhaft seien genannt: Aluminiumoxid oder Siliciumoxid.

Ganz besonders bevorzugt werden Oxide eines Metalls oder eines Halbmetalls aus der 4. Hauptgruppe des Periodensystems der Elemente eingesetzt. Unter diesen ist Siliciumdioxid am meisten bevorzugt.

Die erfindungsgemäßen Oxide eines Metalls oder Halbmetalls werden vorzugsweise als Sol, d.h. als wäßrige, kolloidale Lösung verwendet, das vorzugsweise eine Konzentration 10 bis 50 Masse-% des Metalloxids aufweist und dessen Teilchen im Mittel bevorzugt weniger als 5 µm Durchmesser haben.

Vorzugsweise liegen in dem erfindungsgemäßen Sol die Oxid-Teilchen in einer durchschnittlichen Größe von weniger aus 200 nm, besonders bevorzugt im Bereich von 5 bis 100 nm, vor. Die Teilchengröße wird mittels einer Ultrazentrifuge ermittelt.

Das erfindungsgemäße Gemisch aus einer Säure und Wasser besteht zu mehr als 90 % aus Wasser. Bevorzugt besteht es zu mehr als 95 %, besonders bevorzugt zu mehr als 98 % aus Wasser. Es kann organische oder anorganische Säuren enthalten. Bevorzugt werden schwache Säuren verwendet. Schwache Säuren sind solche Säuren, die einen pKₛ-Wert von größer als 2 haben. Besonders bevorzugt werden aliphatische Carbonsäuren verwendet. Ganz besonders bevorzugt wird Essigsäure verwendet.

Das erfindungsgemäße Beschichtungsmittel enthält 0,005 bis 2 Gew.-Teile, bevorzugt 0,01 bis 0,5 Gew.-Teile, besonders bevorzugt 0,05 bis 0,4 Gew.-Teile der Komponente A.

Das erfindungsgemäße Beschichtungsmittel enthält 1 bis 20 Gew.-Teile, bevorzugt 2 bis 20 Gew.-Teile, besonders bevorzugt 3 bis 8 Gew.-Teile der Komponente B.

Das erfindungsgemäße Beschichtungsmittel hat einen pH-Wert von kleiner als 6, bevorzugt von kleiner als 5.

Die erfindungsgemäßen Beschichtungsmittel können gegebenenfalls noch weitere Komponenten wie z.B. Tenside und organische Lösungsmittel zur besseren Benetzung des Substrates sowie Verlaufsmittel oder Entschäumer enthalten.

Die Herstellung der erfindungsgemäßen Beschichtungsmittel erfolgt vorzugsweise, indem man das Sol des zum Einsatz kommenden Oxids eines Metalls oder Halbmetalls in Wasser herstellt oder ein handelsübliches Sol mit Wasser auf die gewünschte Konzentration in dem erfindungsgemäßen Beschichtungsmittel verdünnt, anschließend vorteilhafterweise einen schwach sauren pH, beispielsweise durch Zugabe von Essigsäure, einstellt und die für die Beschichtungsmittel vorgesehene Menge der Komponente A des erfindungsgemäßen Beschichtungsmittels hinzufügt.

Vorteilhafterweise wird das Beschichtungsmittel und gegebenenfalls auch das gegebenenfalls zum Einsatz kommende Sol des Oxids eines Metalls oder eines Halbmetalls filtriert, so daß die jeweilige Zusammensetzung nur Teilchen mit einem Teilchendurchmesser von bevorzugt weniger als 5 µm enthält.

Die erfindungsgemäßen Beschichtungsmittel können nach allen bekannten Verfahren auf die zu beschichtenden Formkörper aufgebracht werden, so zum Beispiel durch Streichen, Gießen, Walzen, Sprühen oder jede andere bekannte Methode. Es ist auch möglich, Formkörper durch Eintauchen in die erfindungsgemäßen wäßrigen Beschichtungsmittel zu beschichten, wobei sich diese Verfahrensweise insbesondere für Formkörper mit Hohlräumen wie z.B. Stegdoppelplatten eignet, da die Formkörper auf diese Art und Weise auch von innen beschichtet werden können.

Zur Herstellung der wasserspreitenden, transparenten Beschichtung auf den Formkörpem ohne eine Haftvermittlerschicht wird das aufgebrachte erfindungsgemäße Beschichtungsmittel bei erhöhter Temperatur, vorzugsweise bei 90 bis 155°C, besonders bevorzugt bei 110 bis 135°C, getrocknet und eingebrannt. Die Dauer dieses Trocknungs- und Einbrennschrittes richtet sich nach der Menge des aufgetragenen erfindungsgemäßen Beschichtungsmittels und kann, erforderlichenfalls durch einfache Versuche vom einschlägigen Fachmann festgelegt werden.

Vorzugsweise werden die erfindungsgemäßen Beschichtungsmittel in Mengen von 3 bis 15 g/m², besonders bevorzugt in Mengen von von 6 bis 12 g/m² auf den zu beschichtenden Formkörper aufgetragen. Die Dicke der Beschichtung beträgt bevorzugt 0,1 bis 0,5 µm, Besonders bevorzugt beträgt sie 0,2 bis 0,4 µm. Die Beschichtung eines Kunststofformkörpers mit einer erfindungsgemäßen Beschichtungsmittel kann nach oder aber bereits während dessen Herstellung erfolgen.

Die erfindungsgemäßen Beschichtungsmittel eignen sich zur Beschichtung von Formkörpern jeglicher Art. Vorzugsweise werden Formkörper aus Glas verwendet. Weiterhin werden vorzugsweise Formkörper aus thermoplastischen Kunststoffen verwendet. Bevorzugt sind dies transparente thermoplastische Kunststoffe. Insbesondere sind dies Formkörper aus Polymethylmethacrylat, Polystyrol, Polyvinylchlorid oder Polycarbonat, vorzugsweise aus Polycarbonat.

Die zu beschichtenden Formkörper können jede beliebige Gestalt haben. Vorzugsweise haben sie die Gestalt einer Scheibe oder einer Folie. Die Scheibe oder die Folie kann gekrümmt oder eben sein.

Der Formkörper kann auf seiner gesamten Oberfläche oder nur auf einem Teil einer Oberfläche beschichtet sein. Bevorzugt sind 20 bis 100 % der Oberfläche des Formkörpers beschichtet.

Zur Beschichtung geeignete thermoplastische Kunststoffe sind zum Beispiel beschrieben in Becker/Braun, Kunststoff-Handbuch, Carl Hanser Verlag, München, Wien. Die Kunststoffe können Additive enthalten.

Erfindungsgemäß kann insbesondere jedes Polycarbonat beschichtet werden.

Erfindungsgemäß geeignete Polycarbonate sind sowohl Homopolycarbonate als auch Copolycarbonate. Auch eine Mischung der erfindungsgemäß geeigneten Polycarbonate kann verwendet werden.

Die Polycarbonate können teilweise oder vollständig durch aromatische Polyestercarbonate ersetzt werden.

Die Polycarbonate können auch Polysiloxan-Blöcke enthalten. Deren Herstellung wird beispielsweise in US-A 3 821 315, US-A 3 189 662 und US-A 3 832 419 beschrieben.

Bevorzugte Polycarbonate sind solche auf Basis der Bisphenole der allgemeinen Formel (4)

HO-Z-OH (4)

worin Z ein divalenter organischer Rest mit 6 bis 30 C-Atomen ist, der eine oder mehrere aromatische Gruppen enthält.

Beispiele für Bisphenole gemäß der allgemeinen Formel (4) sind Bisphenole, die zu den folgenden Gruppen gehören:
Dihydroxydiphenyle,
Bis-(hydroxyphenyl)-alkane,
Bis-(hydroxyphenyl)-cycloalkane,
Bis-(hydroxyphenyl)-sulfide,
Bis-(hydroxyphenyl)-ether,
Bis-(hydroxyphenyl)-ketone,
Bis-(hydroxyphenyl)-sulfone,
Bis-(hydroxyphenyl)-sulfoxide und
α,α'*-* Bis-(hydroxyphenyl)-diisopropylbenzole.

Auch Derivate der genannten Bisphenole, die zum Beispiel durch Alkylierung oder Halogenierung an den aromatischen Ringen der genannten Bisphenole zugänglich sind, sind Beispiele für Bisphenole gemäß der allgemeinen Formel (4).

Beispiele für Bisphenole gemäß der allgemeinen Formel (4) sind insbesondere die folgenden Verbindungen:
Hydrochinon,
Resorcin,
4,4'-Dihydroxydiphenyl,
Bis-(3,5-dimethyl-4-hydroxyphenyl)-methan,
Bis-(3,5-dimethyl-4-hydroxyphenyl)-sulfon.
1,1- Bis-(3,5-dimethyl-4-hydroxyphenyl)-p/m-diisopropylbenzol,
1,1-Bis-(4-hydroxyphenyl)-1-phenyl-ethan,
1,1- Bis-(3,5-dimethyl-4-hydroxyphenyl)-cyclohexan,
1,1- Bis-(4-hydroxyphenyl)-3-methylcyclohexan,
1,1- Bis-(4-hydroxyphenyl)-3,3-dimethylcyclohexan,
1,1-Bis-(4-hydroxyphenyl)-4-methylcyclohexan,
1,1- Bis-(4-hydroxyphenyl)-cyclohexan
1,1-Bis-(4-hydroxyphenyl)-3,3,5-trimethylcyclohexan,
2,2-Bis-(3,5-dichlor-4-hydroxyphenyl)-propan,
2,2-Bis-(3-methyl-4-hydroxyphenyl)-propan,
2,2-Bis-(3,5-dimethyl-4-hydroxyphenyl)-propan,
2,2-Bis-(4-hydroxyphenyl)-propan (d.h. Bisphenol A),
2,2-Bis-(3-chlor-4-hydroxyphenyl)-propan,
2,2-Bis-(3,5-dibrom-4-hydroxyphenyl)-propan,
2,4-Bis-(4-hydroxyphenyl)-2-methylbutan.
2,4-Bis-(3,5-dimethyl-4-hydroxyphenyl)-2-methylbutan.
α,α'-Bis-(4-hydroxyphenyl)-o-diisopropylbenzol,
α,α'-Bis-(4-hydroxyphenyl)-m-diisopropylbenzol (d.h. Bisphenol M) und
α,α'-Bis-(4-hydroxyphenyl)-p-diisopropylbenzol.

Besonders bevorzugte Polycarbonate sind das Homopolycarbonat auf Basis von Bisphenol A, das Homopolycarbonat auf Basis von 1,1-Bis-(4-hydroxyphenyl)-3,3,5-trimethylcyclohexan und die Copolycarbonate auf Basis von Bisphenol A und 1,1-Bis-(4-hydroxyphenyl)-3,3,5-trimethylcyclohexan.

Die beschriebenen Bisphenole gemäß der allgemeinen Formel (4) können nach bekannten Verfahren, z.B. aus den entsprechenden Phenolen und Ketonen, hergestellt werden.

Verfahren zur Herstellung der genannten Bisphenole sind zum Beispiel beschrieben in der Monographie H. Schnell, "Chemistry and Physis of Polycarbonates", Polymer Reviews, Band 9, S. 77-98, Interscience Publishers, New York, London, Sidney, 1964 und in US-A 3 028 635, in US-A 3 062 781, in US-A 2 999 835, in US-A 3 148 172, ins US-A 2 991 273, in US-A 3 271 367, in US-A 4 982 014, in US-A 2 999 846, in DE-A 1 570 703, in DE-A 2 063 050, in DE-A 2 036 052, in DE-A 2 211 956, in DE-A 3 832 396, und in FR-A 1 561 518 sowie in den Japanischen Offenlegungsschriften mit den Anmeldenummern 62039/1986, 62040/1986 und 105550/1986.

Die Herstellung von 1,1-Bis-(4-hydroxyphenyl)-3,3,5-trimethylcyclohexan ist z.B. beschrieben in US-A 4 982 014.

Polycarbonate können nach bekannten Verfahren hergestellt werden. Geeignete Verfahren zur Herstellung von Polycarbonaten sind zum Beispiel die Herstellung aus Bisphenolen mit Phosgen nach dem Phasengrenzflächenverfahren oder aus Bisphenolen mit Phosgen nach dem Verfahren in homogener Phase, dem sogenannten Pyridinverfahren, oder aus Bisphenolen mit Kohlesäureestern nach dem Schmelzumesterungsverfahren. Diese Herstellverfahren sind z.B. beschrieben in H. Schnell, "Chemistry and Physis of Polycarbonates", Polymer Reviews, Band 9, S. 31-76, Interscience Publishers, New York, London, Sidney, 1964. Die genannten Herstellverfahren sind auch beschrieben in D. Freitag, U. Grigo, P.R. Müller, H. Nouvertne, "Polycarbonates" in Encyclopedia of Polymer Science and Engineering, Volume 11, Second Edition, 1988, Seiten 648 bis 718 und in U. Grigo, K. Kirchner und P.R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117 bis 299.

Das Schmelzumesterungsverfahren ist besonders beschrieben in H. Schnell. "Chemistry and Physis of Polycarbonates", Polymer Reviews, Band 9, S. 44-51, Interscience Publishers, New York, London, Sidney, 1964 sowie in DE-A 1 031 512, in US-A 3 022 272, in US-A 5 340 905 und in US-A 5 399 659.

Kohlensäurediester, die zur Herstellung von Polycarbonaten nach dem Schmelzumesterungsverfahren eingesetzt werden können, sind zum Beispiel Diarylester der Kohlensäure, wobei die beiden Arylreste bevorzugt jeweils 6 bis 14 C-Atome haben. Vorzugsweise werden die Diester der Kohlensäure auf der Basis von Phenol oder alkylsubstitutierten Phenolen, also zum Beispiel Diphenylcarbonat oder Dikresylcarbonat, eingesetzt.

Die erfindungsgemäß geeigneten Polycarbonate haben bevorzugt ein Gewichtsmittel der molaren Masse (M̅_{w}), welches sich z.B. durch Ultrazentrifugation oder Streulichtmessung bestimmen läßt, von 10 000 bis 200 000 g/mol. Besonders bevorzugt haben sie ein Gewichtsmittel der molaren Masse von 12 000 bis 80 000 g/mol.

Die mittlere molare Masse der erfindungsgemäßen Polycarbonate kann zum Beispiel in bekannter Weise durch eine entsprechende Menge an Kettenabbrechern eingestellt werden.

Geeignete Kettenabbrecher sind sowohl Monophenole als auch Monocarbonsäuren. Geeignete Monophenole sind z.B. Phenol, p-Chlorphenol, p-tert.-Butylphenyol, Cumylphenol oder 2,4,6-Tribromphenol, sowie langkettige Alkylphenole, wie z.B. 4-(1,1,3,3-Tetramethylbutyl)-phenol oder Monoalkylphenole bzw. Dialkylphenole mit insgesamt 8 bis 20 C-Atomen in den Alkylsubstituenten wie z.B. 3,5-di-tert.-Butylphenol, p-tert.-Octylphenol, p-Dodecylphenol, 2-(3,5-Dimethyl-heptyl)-phenol oder 4-(3,5-Dimethyl-heptyl)-phenol. Geeignete Monocarbonsäuren sind Benzoesäure, Alkylbenzoesäuren und Halogenbenzoesäuren.

Bevorzugte Kettenabbrecher sind Phenol, p-tert.-Butylphenol, 4-(1,1,3,3-Tetramethylbutyl)-phenol und Cumylphenol.

Die Menge an Kettenabbrechern beträgt bevorzugt zwischen 0,5 und 10 Mol-%, bezogen auf die Summe der jeweils eingesetzten Bisphenole.

Die erfindungsgemäß geeigneten Polycarbonate können in bekannter Weise verzweigt sein, und zwar vorzugsweise durch den Einbau von trifunktionellen oder mehr als trifunktionellen Verzweigern. Geeignete Verzweiger sind z.B. solche mit drei oder mehr als drei phenolischen Gruppen oder solche mit drei oder mehr als drei Carbonsäuregruppen.

Geeignete Verzweiger sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis-[4,4-bis-(4-hydroxyphenyl)-cyclohexyl]propan, 2,4-Bis-(4-hydroxyphenyl-isopropyl)-phenol, 2,6-Bis-(2-hydroxy-5'-methyl-benzyl)-4-methylphenol, 2-(4-Hydroxyphenyl)-2-(2,4-dihydroxyphenyl)-propan, Hexa-(4-(4-hydroxyphenyl-isopropyl)-phenyl)-terephthalsäureester, Tetra-(4-hydroxyphenyl)-methan, Tetra-(4-(4-hydroxyphenyl-isopropyl)-phenoxy)-methan und 1,4-Bis-(4',4"-dihydroxytriphenyl)-methylbenzol sowie 2,4-Dihydroxybenzoesäure, Trimesinsäure, Cyanurchlorid, 3,3-Bis-(3-methyl-4-hydroxyphenyl)-2-oxo-2,3-dihydroindol. Trimesinsäuretrichlorid und α,α,α"-Tris-(4-hydroxyphenol)-1,3,5-triisopropylbenzol.

Bevorzugte Verzweiger sind 3,3-Bis-(3-methyl-4-hydroxyphenyl)-2-oxo-2,3-dihydroindol und 1,1,1-Tris-(4-hydroxyphenyl)-ethan.

Die Menge der gegebenenfalls einzusetzenden Verzweiger beträgt bevorzugt 0,05 Mol.-% bis 2 Mol.-%, bezogen auf Mole an eingesetzten Bisphenolen.

Die Verzweiger können zum Beispiel im Falle der Herstellung des Polycarbonates nach dem Phasengrenzflächenverfahren mit den Bisphenolen und den Kettenabbrechern in der wäßrig alkalischen Phase vorgelegt werden, oder in einem organischen Lösungsmittel gelöst zusammen mit den Kohlensäurederivaten zugegeben werden. Im Falle des Umesterungsverfahrens werden die Verzweiger bevorzugt zusammen mit den Dihydroxyaromaten oder Bisphenolen dosiert.

Zur Modifizierung der Eigenschaften können den erfindungsgemäßen Polycarbonaten übliche Additive zugemischt und/oder auf die Oberfläche der Formkörper aufgebracht werden. Übliche Additive sind zum Beispiel: Füllstoffe, Verstärkungsstoffe, Stabilisatoren (zum Beispiel UV-Stabilisatoren, Thermostabilisatoren, Gammastrahlenstabilisatoren), Antistatika, Fließhilfsmittel, Entformungsmittel, Brandschutzmittel, Farbstoffe und Pigmente. Die genannten und weiter geeignete Additive sind zum Beispiel beschrieben in Gächter, Müller, Kunststoff-Additive, 3. Ausgabe, Hanser-Verlag, München Wien, 1989.

Den erfindungsgemäßen Polycarbonaten können andere Polymere zugemischt werden, wodurch sogenannte Polymerblends erhalten werden. Beispielsweise können Blends aus den erfindungsgemäßen Polycarbonaten und Polyolefinen, insbesondere ABS-Polymeren, hergestellt werden.

Die erfindungsgemäßen beschichteten Formkörper können z.B. als Verglasungsmaterial oder als Bestandteil von Automobilen, Gewächshäusern, Schwimmhallen. Stadien, Bahnhöfen, Fabrikhallen, Dachabdeckungen, Wänden, Leuchtenabdeckungen, Architekturverglasungen, Lichtkuppeln, Visieren, Brillen, Grafiken, Reklametafeln, Displays, Verpackungen oder von Scheiben für Fortbewegungsmittel aller Art verwendet werden. Unter einem Verglasungsmaterial soll ein Material verstanden werden, das überall dort eingesetzt werden kann, wo üblicherweise Scheiben aus konventionellen anorganischen Gläsern eingesetzt wurden oder noch eingesetzt werden.

Im folgenden wird die Erfindung in den nachstehenden Beispielen näher erläutert.

### Herstellung der Beschichtungsmittel:

### Beschichtungsmittel A

Zu 416,7 g vollentsalztem Wasser werden unter Rühren 83,3 g Kieselsol (Levasil^{®} 300F der Firma Bayer AG), das vorher durch ein 5 µm Filter filtriert wurde, hinzugegeben. Die wäßrige Suspension wird dann mit 98 %iger Essigsäure auf einen pH-Wert von 4,8 eingestellt und mit 1,5 g Dapro^{®} U99 (einer Lösung von 40 g Sulfonbernsteinsäure-bis-(2-ethylhexylester)-Natriumsalz in 43 g 2-Butoxyethanol, 4 g Ethanol, 3 g Wasser und 10 g Polyethylenglykol-Fettsäureester (Gemisch basierend im wesentlichen auf Polyethylenglykol-Ölsäureester, Polyethylenglykol-Palmitinsäureester und Polyethylenglykol-Stearinsäureester)) versetzt.

Levasil^{®} 300F ist ein anionisch stabilisiertes Kieselsol der Bayer AG mit einer mittleren Teilchengröße von 7 bis 8 nm bzw. einer spezifischen Oberfläche von 300 m²/g. Levasil^{®} 300F hat einen Feststoffgehalt von 30 Masse-% und einen pH-Wert von ca. 9,8. Es enthält eine geringe Menge von ≤ 0,2 Gew.-% am Formaldehyd gegen Mikroorganismenbefall.

### Beschichtungsmittel B

Die Herstellung erfolgt analog Beschichtungsmittel A. Anstelle von Dapro^{®} U99 werden jedoch 0,675 g Sulfonbernsteinsäure-bis-(2-ethylhexylester)-Natriumsalz in 0,825 g 2-Butoxyethanol hinzugegeben.

### Beschichtungsmittel C

Die Herstellung erfolgt analog Beschichtungsmittel A. Anstelle der genannten Lösung werden jedoch 0,621 g Sulfonbernsteinsäure-bis-(2-ethylhexylester)-Natriumsalz, 0,054 g Polyethylenglykol (Zahlenmittel der Molmasse: 1 000) in 0,754 g 2-Butoxyethanol und 0,0705 g Ethanol hinzugegeben.

### Beschichtungsmittel D

Die Herstellung erfolgt analog Beschichtungsmittel C. Anstelle des Polyethylenglykols werden 0,062 g Polyethylenglykol-Fettsäureester (Gemisch basierend im wesentlichen auf Polyethylenglykol-Ölsäureester, Polyethylenglykol-Palmitinsäureester und Polyethylenglykol-Stearinsäureester) hinzugegeben.

### Beschichtung von Polycarbonat-Hohlkammerplatten

Hohlkammerplatten aus einem verzweigten aromatischen Polycarbonat (relative Lösungsviskosität 1,315 gemessen an einer Lösung von 0,5 g Polycarbonat in 100 ml Methylenchlorid bei Raumtemperatur), wie sie für den Gewächshausbau verwendet werden, wurden jeweils mit den Beschichtungsmittel A bis D im Flutverfahren einseitig beschichtet und anschließend bei 130°C 0,5 h lang getrocknet. Die Schichtdicken lagen bei ca. 0,3 µm (Dickenmeßgerät ETA-SD-30, Fa. ETA-Optik, Interferenzverfahren). Die Beschichtungen waren ohne Oberflächenstörungen und zeigten keine Interferenzmuster. Die Benetzung mit Wasser war gleichmäßig. Der Randwinkel des Wassers lag unter 1 °.

### Dampftest (100°C)

Als weiterer Test wurde der Dampftest durchgeführt. Hierbei werden die Hohlkammerplatten einer 100°C heißen abgeschlossenen Wasserdampfatmosphäre ausgesetzt. Es wird beobachtet, wann der wasserspreitende Effekt verschwindet und die erste Tropfenbildung erfolgt.

### Ergebnis:

| | **Beschichtungsmittel** | **Lebensdauer der Beschichtung im Dampftest** |
|---|---|---|
| Beispiel | A | über 3 Stunden |
| Vergleichsbeispiel | Copolyacrylat/Kieselsol | 30 Minuten |

Im Falle des Vergleichsbeispieles war nach 30 Minuten eine deutliche Ablösung der Beschichtung unter bräunlicher Verfärbung der Wassertropfen zu beobachten.

### Modellgewächshaustest

Die beschichteten Polycarbonat Hohlkammerplatten wurden in einem Winkel von 60° mit der beschichteten Seite nach unten an der Decke eines Modellgewächshauses befestigt, so daß die wasserspreitende Wirkung durch Beobachtung der Tröpfchenbildung verglichen werden konnte. In dem Modellgewächshaus wurde mittels einer Heizquelle Wasser verdampft, so daß sich eine Temperatur von 50°C und eine Luftfeuchtigkeit von 100 % einstellte.

Die Platten wurden 6 h unter diesen Bedingungen belassen und anschließend in einem trockenen Heizschrank 4h bei 40°C erhitzt. Anschließend wiederholte man die Prozedur im Modellgewächshaus und im Heizschrank immer abwechselnd, solange bis der wasserspreitende Effekt verschwand (ersichtlich an der Tropfenbildung auf der Platte).

Vergleichsweise wurden drei kommerziell erhältliche Polycarbonathohlkammerplatten, die mit einer wasserspreitenden Beschichtung, wie sie für den Gewächshausbau verwendet werden, mitgetestet.

### Ergebnis:

| | **Beschichtung** | **Lebensdauer der Beschichtung (in Zyklen)** |
|---|---|---|
| Beispiel 1 | A | >80 |
| Beispiel 2 | B | >80 |
| Beispiel 3 | C | >80 |
| Beispiel 4 | D | >80 |
| Vergleichsbeispiel 5 | Copolyacrylat/Kieselsol | >80 |
| Vergleichsbeispiel 6 | Polyvinylpyrrolidon/Kieselsol | 15 |
| Vergleichsbeispiel 7 | Tensid/Kieselsol | 15 |

## Patentansprüche

1. Beschichtete Formkörper erhältlich durch Beschichten eines Teils der Formkörperoberfläche oder der gesamten Formkörperoberfläche mit einem Beschichtungsmittel enthaltend
A) 0,005 bis 2 Gewichtsteile einer Verbindung repräsentiert durch die allgemeine Formel (1) 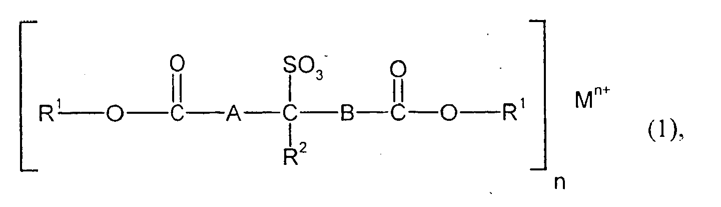 worin
R¹ ein Kohlenwasserstoffrest mit 1 bis 30 C-Atomen,
R² Wasserstoff oder ein Kohlenwasserstoffrest mit 1 bis 6 C-Atomen,
A eine Einfachbindung oder ein divalenter Kohlenwasserstoffrest mit 1 bis 30 C-Atomen,
B eine Einfachbindung oder ein divalenter Kohlenwasserstoffrest mit 1 bis 30 C-Atomen,
n 1, 2, 3 oder 4 und
Mⁿ⁺ ein n-fach-positiv geladenes Kation ist,
B) 1 bis 20 Gewichtsteile eines wasserunlöslichen Oxides oder mehrerer wasserunlöslicher Oxide eines Metalls oder eines Halbmetalls,
C) 80 bis 100 Gewichtsteile eines Gemisches aus einer Säure und Wasser, das zu mehr als 90 % aus Wasser besteht,
mit der Maßgabe, daß der pH-Wert des Beschichtungsmittels kleiner als 6 ist.

2. Beschichtete Formkörper nach Anspruch 1 erhältlich durch Beschichten eines Teils der Formkörperoberfläche oder der gesamten Formkörperoberfläche mit einem Beschichtungsmittel enthaltend
A) 0,005 bis 2 Gewichtsteile einer Verbindung repräsentiert durch die allgemeine Formel (2) 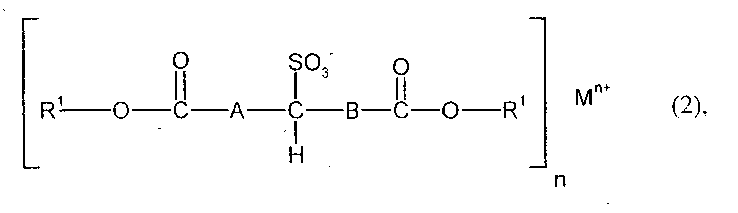 worin
R¹ ein aliphatischer Kohlenwasserstoffrest mit 1 bis 30 C-Atomen,
A eine Einfachbindung oder ein divalenter aliphatischer Kohlenwasserstoffrest mit 1 bis 3 C-Atomen,
B eine Einfachbindung oder ein divalenter aliphatischer Kohlenwasserstoffrest mit 1 bis 3 C-Atomen,
n 1 oder 2 und
Mⁿ⁺ ein n-fach-positiv geladenes Kation ist,
B) 1 bis 20 Gewichtsteile eines wasserunlöslichen Oxides oder mehrer wasserunlöslicher Oxide eines Metalls oder eines Halbmetalls aus der 3. oder 4. Hauptgruppe oder der 2., 3., 4., 5., 6. 7. oder 8. Nebengruppe des Periodensystems der Elemente,
C) 80 bis 100 Gewischtsteile eines Gemisches einer Säure und Wasser, das zu mehr als 90 % aus Wasser besteht,
mit der Maßgabe, daß der pH-Wert des Beschichtungsmittels kleiner als 6 ist.

3. Beschichtete Formkörper nach Anspruch 1 erhältlich durch Beschichten eines Teils der Formkörperoberfläche oder der gesamten Formkörperoberfläche mit einem Beschichtungsmittel enthaltend
A) 0,005 bis 2 Gewichtsteile einer Verbindung repräsentiert durch die allgemeine Formel (3) 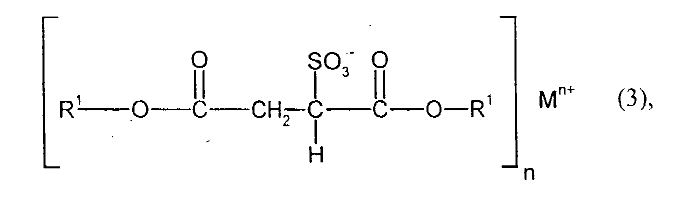 worin
R¹ ein aliphatischer Kohlenwasserstoffrest mit 1 bis 30 C-Atomen,
n 1 oder 2 und
Mⁿ⁺ ein n-fach-positiv geladenes Kation ist,
B) 1 bis 20 Gewichtsteile eines Sols eines wasserunlöslichen Oxides oder mehrerer wasserunlöslicher Oxide eines Metalls oder eines Halbmetalls aus der 3. oder 4. Hauptgruppe des Periodensystems der Elemente,
C) 80 bis 100 Gewichtsteile eines Gemisches einer schwachen Säure und Wasser, das zu mehr als 90 % aus Wasser besteht,
mit der Maßgabe, daß der pH-Wert des Beschichtunsgemittels kleiner als 6 ist.

4. Beschichtete Formkörper nach Anspruch 1 erhältlich durch Beschichten eines Teils der Formkörperoberfläche oder der gesamten Formkörperoberfläche mit einem Beschichtungsmittel enthaltend
A) 0,005 bis 2 Gewichtsteile einer Verbindung repräsentiert durch die allgemeine Formel (3) 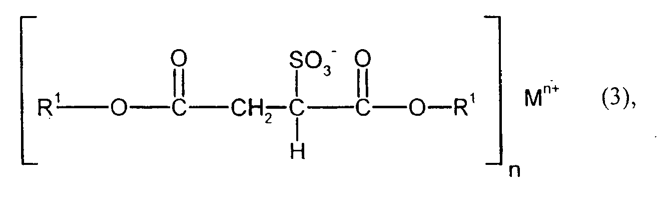 worin
R¹ ein aliphatischer Kohlenwasserstoffrest mit 1-30 C-Atomen,
n 1 oder 2 und
Mⁿ⁺ ein Alkalimetallkation (für n = 1) oder ein Erdalkalimetallkation (für n = 2) ist,
B) 1 bis 20 Gewichtsteile eines Sols eines wasserunlöslichen Oxides eines Metalls oder eines Halbmetalls aus der 3. oder 4. Hauptgruppe des Periodensystems der Elemente,
C) 80 bis 100 Gewichtsteile eines Gemischs einer schwachen Säure und Wasser, das zu mehr als 90% aus Wasser besteht,
mit der Maßgabe, daß der pH-Wert des Beschichtungsmittels kleiner als 6 ist.

5. Beschichtete Formkörper nach Anspruch 1 erhältlich durch Beschichten eines Teils der Formkörperoberfläche oder der gesamten Formkörperoberfläche mit einem Beschichtungsmittel enthaltend
A) 0,005 bis 2 Gewichtsteile einer Verbindung repräsentiert durch die allgemeine Formel (5) 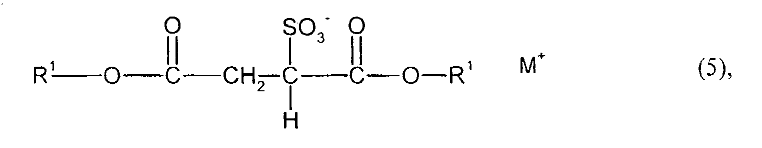 worin
R¹ ein aliphatischer Kohlenwasserstoffrest mit 1-30 C-Atomen und
M⁺ ein Alkalimetallkation ist,
B) 1 bis 20 Gewichtsteile eines Sols eines wasserunlöslichen Oxides eines Metalls oder eines Halbmetalls aus der 4. Hauptgruppe des Periodensystems der Elemente,
C) 80 bis 100 Gewichtsteile eines Gemisches einer schwachen Säure und Wasser, das zu mehr als 90 % aus Wasser besteht,
mit der Maßgabe, daß der pH-Wert des Beschichtungsmittels kleiner als 6 ist.

6. Beschichtete Formkörper gemäß einem der Ansprüche 1 bis 5, **dadurch gekennzeichnet, daß** die Beschichtung, die durch das Beschichten mit dem erfindungsgemäßen Beschichtungsmittel erhalten wird, 0,1 bis 0,5 µm dick ist.

7. Beschichtete Formkörper gemäß einem der Ansprüche 1 bis 6, **dadurch gekennzeichnet, daß** der zur Beschichtung verwendete Formkörper aus Glas oder aus einem transparenten thermoplastischen Kunststoff besteht.

8. Beschichtete Formkörper gemäß einem der Ansprüche 1 bis 7, **dadurch gekennzeichnet, daß** der Formkörper die Gestalt einer Scheibe oder Folie hat.

9. Verwendung der beschichtete Formkörper gemäß einem der Ansprüche 1 bis 8 als Verglasungsmaterial.

10. Verwendung der beschichteten Formkörper gemäß einem der Ansprüche 1 bis 9 als Bestandteil von Automobilen, Gewächshäusern, Schwimmhallen, Stadien, Bahnhöfen, Fabrikhallen, Dachabdeckungen, Wänden, Leuchtenabdeckungen, Architekturverglasungen, Lichtkuppeln, Visieren, Brillen, Grafiken, Reklametafeln, Displays, Verpackungen oder von Scheiben für Fortbewegungsmittel aller Art.

## Claims

1. Coated mouldings, obtainable by coating a part of the surface of the moulding or the entire surface of the moulding with a coating agent containing
A) 0.005 to 2 parts by weight of a compound represented by the general formula (1) 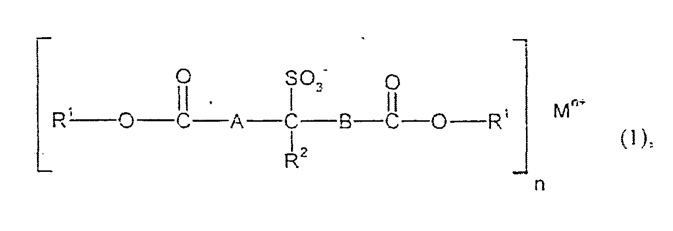 in which
R¹ is a hydrocarbon residue with 1 to 30 C atoms,
R² is hydrogen or a hydrocarbon residue with 1 to 6 C atoms,
A is a single bond or a divalent hydrocarbon residue with 1 to 30 C atoms,
B is a single bond or a divalent hydrocarbon residue with 1 to 30 C atoms,
n is 1, 2, 3 or 4 and
Mⁿ⁺ is a cation with a positive charge n,
B) 1 to 20 parts by weight of a water-insoluble oxide or of several water-insoluble oxides of a metal or semimetal,
C) 80 to 100 parts by weight of a mixture of an acid and water, consisting of more than 90 % water,
with the proviso that the pH value of the coating agent is less than 6.

2. Coated mouldings according to claim 1, obtainable by coating a part of the surface of the moulding or the entire surface of the moulding with a coating agent containing
A) 0.005 to 2 parts by weight of a compound represented by the general formula (2) 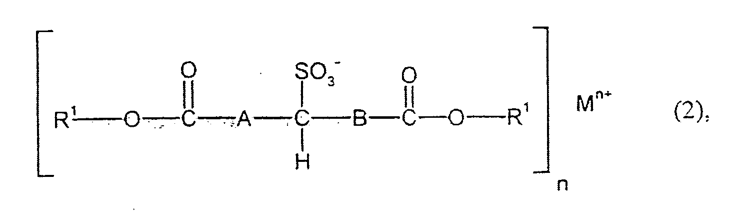 in which
R¹ is an aliphatic hydrocarbon residue with 1 to 30 C atoms,
A is a single bond or a divalent aliphatic hydrocarbon residue with 1 to 3 C atoms,
B is a single bond or a divalent aliphatic hydrocarbon residue with 1 to 3 C atoms,
n is 1 or 2 and
Mⁿ⁺ is a cation with a positive charge n,
B) 1 to 20 parts by weight of a water-insoluble oxide or of several water-insoluble oxides of a metal or semimetal from the 3rd or 4th main group or from the 2nd, 3rd, 4th, 5th, 6th, 7th or 8th subgroup of the periodic table of the elements,
C) 80 to 100 parts by weight of a mixture of an acid and water, consisting of more than 90 % water,
with the proviso that the pH value of the coating agent is less than 6.

3. Coated mouldings according to claim 1, obtainable by coating a part of the surface of the moulding or the entire surface of the moulding with a coating agent containing
A) 0.005 to 2 parts by weight of a compound represented by the general formula (3) 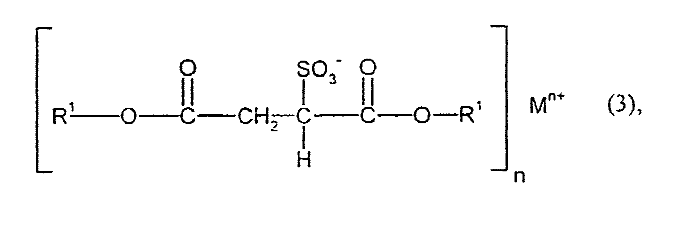 in which
R¹ is an aliphatic hydrocarbon residue with 1 to 30 C atoms,
n is 1 or 2 and
Mⁿ⁺ is a cation with a positive charge n,
B) 1 to 20 parts by weight of a sol of a water-insoluble oxide or of several water-insoluble oxides of a metal or semimetal from the 3rd or 4th main group of the periodic table of the elements,
C) 80 to 100 parts by weight of a mixture of a weak acid and water, consisting of more than 90 % water,
with the proviso that the pH value of the coating agent is less than 6.

4. Coated mouldings according to claim 1, obtainable by coating a part of the surface of the moulding or the entire surface of the moulding with a coating agent containing
A) 0.005 to 2 parts by weight of a compound represented by the general formula (3) 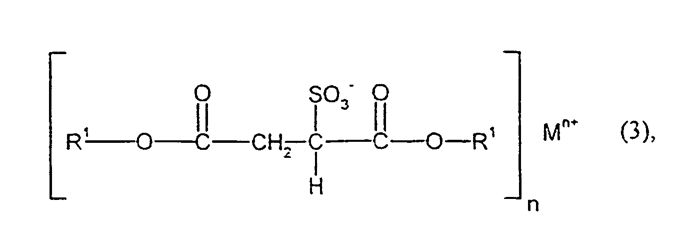 in which
R¹ is an aliphatic hydrocarbon residue with 1 to 30 C atoms,
n is 1 or 2 and
Mⁿ⁺ is an alkali-metal cation (for n = 1) or an alkaline-earth metal cation (for n = 2),
B) 1 to 20 parts by weight of a sol of a water-insoluble oxide of a metal or semimetal from the 3rd or 4th main group of the periodic table of the elements,
C) 80 to 100 parts by weight of a mixture of a weak acid and water, consisting of more than 90 % water,
with the proviso that the pH value of the coating agent is less than 6.

5. Coated mouldings according to claim 1, obtainable by coating a part of the surface of the moulding or the entire surface of the moulding with a coating agent containing
A) 0.005 to 2 parts by weight of a compound represented by the general formula (5) 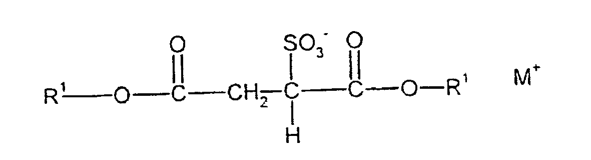 in which
R¹ is an aliphatic hydrocarbon residue with 1 to 30 C atoms and
M⁺ is an alkali-metal cation,
B) 1 to 20 parts by weight of a sol of a water-insoluble oxide of a metal or semimetal from the 4th main group of the periodic table of the elements,
C) 80 to 100 parts by weight of a mixture of a weak acid and water, consisting of more than 90 % water,
with the proviso that the pH value of the coating agent is less than 6.

6. Coated mouldings according to one of claims 1 to 5, **characterised in that** the coating which is obtained by coating with the coating agent according to the invention is 0.1 to 0.5 µm thick.

7. Coated mouldings according to one of claims 1 to 6, **characterised in that** the moulding used for coating consists of glass or of a transparent thermoplastic.

8. Coated mouldings according to one of claims 1 to 7, **characterised in that** the moulding takes the form of a pane or film.

9. Use of the coated mouldings according to one of claims 1 to 8 as glazing material.

10. Use of the coated mouldings according to one of claims 1 to 9 as a constituent part of automobiles, greenhouses, swimming pools, stadia, railway stations, factory buildings, roof coverings, walls, lamp covers, architectural glazings, light cupolas, visors, spectacles, graphics, advertising hoardings, displays, packagings or of panes for means of locomotion of all types.

## Revendications

1. Corps moulés munis d'un revêtement obtenus par revêtement d'une partie de la surface du corps moulé ou de la surface totale du corps moulé avec un agent de revêtement contenant
A) de 0,005 à 2 parties en poids d'un composé représenté par la formule générale (1) 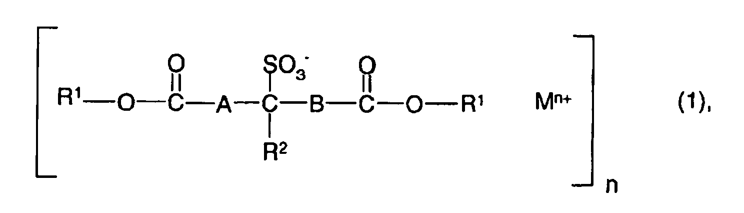 dans laquelle
R¹ est un reste hydrocarboné avec de 1 à 30 atomes de C,
R² est un atome d'hydrogène ou un reste hydrocarboné avec de 1 à 6 atomes de C,
A est une liaison simple ou un reste hydrocarboné divalent avec de 1 à 30 atomes de C,
B est une liaison simple ou un reste hydrocarboné divalent avec de 1 à 30 atomes de C,
n est égal à 1, 2, 3 ou 4 et
Mⁿ⁺ est un cation chargé n-fois positivement,
B) de 1 à 20 parties en poids d'un oxyde non soluble dans l'eau ou de plusieurs oxydes non solubles dans l'eau d'un métal ou d'un semi-métal,
C) de 80 à 100 parties en poids d'un mélange d'un acide et d'eau, lequel est constitué à plus de 90 % d'eau,
avec la mesure que la valeur de pH de l'agent de revêtement est inférieure à 6.

2. Corps moulés munis d'un revêtement selon la revendication 1 obtenus par revêtement d'une partie de la surface du corps moulé ou de la surface totale du corps moulé avec un agent de revêtement contenant
A) de 0,005 à 2 parties en poids d'un composé représenté par la formule générale (2) 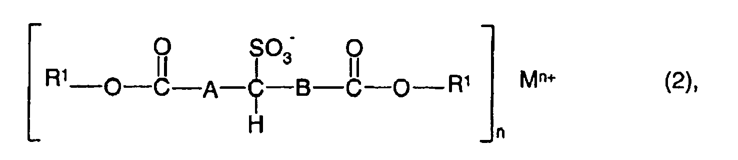 dans laquelle
R¹ est un reste hydrocarboné aliphatique avec de 1 à 30 atomes de C,
A est une liaison simple ou un reste hydrocarboné aliphatique divalent avec de 1 à 3 atomes de C,
B est une liaison simple ou un reste hydrocarboné aliphatique divalent avec de 1 à 3 atomes de C,
n est égal à 1 ou à 2 et
Mⁿ⁺ est un cation chargé n-fois positivement,
B) de 1 à 20 parties en poids d'un oxyde non soluble dans l'eau ou de plusieurs oxydes non solubles dans l'eau d'un métal ou d'un semi-métal du troisième ou quatrième groupe principal ou du deuxième, troisième, quatrième, cinquième, sixième, septième ou huitième groupe secondaire de la classification périodique des éléments,
C) de 80 à 100 parties en poids d'un mélange d'un acide et d'eau, lequel est constitué jusqu'à plus de 90 % d'eau,
avec la mesure que la valeur de pH de l'agent de revêtement est inférieure à 6.

3. Corps moulés munis d'un revêtement selon la revendication 1 obtenus par revêtement d'une partie de la surface du corps moulé ou de la surface totale du corps moulé avec un agent de revêtement contenant
A) de 0,005 à 2 parties en poids d'un composé représenté par la formule générale (3) 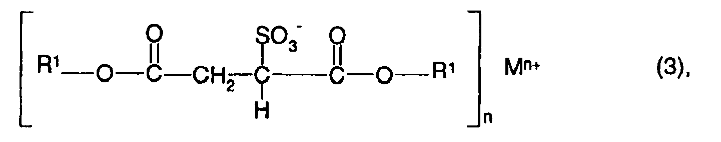 dans laquelle
R¹ est un reste hydrocarboné aliphatique avec de 1 à 30 atomes de C,
n est égal à 1 ou à 2 et
Mⁿ⁺ est un cation chargé n-fois positivement,
B) de 1 à 20 parties en poids d'un sol d'un oxyde non soluble dans l'eau ou de plusieurs oxydes non solubles dans l'eau d'un métal ou d'un semi-métal du troisième ou quatrième groupe principal de la classification périodique des éléments,
C) de 80 à 100 parties en poids d'un mélange d'un acide faible et d'eau, lequel est constitué jusqu'à plus de 90 % d'eau,
avec la mesure que la valeur de pH de l'agent de revêtement est inférieure à 6.

4. Corps moulés munis d'un revêtement selon la revendication 1 obtenus par revêtement d'une partie de la surface du corps moulé ou de la surface totale du corps moulé avec un agent de revêtement contenant
A) de 0,005 à 2 parties en poids d'un composé représenté par la formule générale (3) 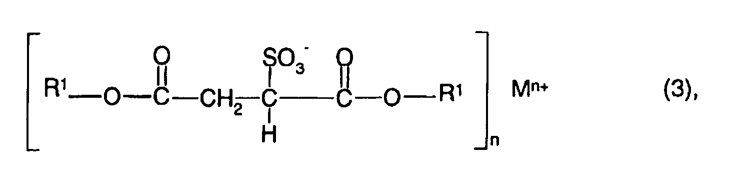 dans laquelle
R¹ est un reste hydrocarboné aliphatique avec de 1 à 30 atomes de C,
n est égal à 1 ou à 2 et
Mⁿ⁺ est un cation de métal alcalin (pour n = 1) ou un cation de métal alcalino-terreux (pour n=2),
B) de 1 à 20 parties en poids d'un sol d'un oxyde non soluble dans l'eau d'un métal ou d'un semi-métal du troisième ou quatrième groupe principal de la classification périodique des éléments,
C) de 80 à 100 parties en poids d'un mélange d'un acide faible et d'eau, lequel est constitué jusqu'à plus de 90 % d'eau,
avec la mesure que la valeur de pH de l'agent de revêtement est inférieure à 6.

5. Corps moulés munis d'un revêtement selon la revendication 1 obtenus par revêtement d'une partie de la surface du corps moulé ou de la surface totale du corps moulé avec un agent de revêtement contenant
A) de 0,005 à 2 parties en poids d'un composé représenté par la formule générale (5) 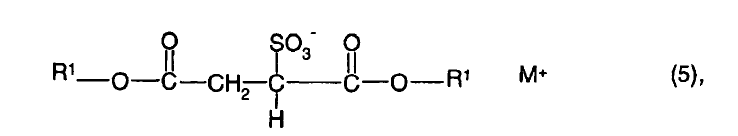 dans laquelle
R¹ est un reste hydrocarboné aliphatique avec de 1 à 30 atomes de C, et
M⁺ est un cation de métal alcalin,
B) de 1 à 20 parties en poids d'un sol d'un oxyde non soluble dans l'eau d'un métal ou d'un semi-métal du quatrième groupe principal de la classification périodique des éléments,
C) de 80 à 100 parties en poids d'un mélange d'un acide faible et d'eau, lequel est constitué jusqu'à plus de 90 % d'eau,
avec la mesure que la valeur de pH de l'agent de revêtement est inférieure à 6.

6. Corps moulés munis d'un revêtement selon l'une quelconque des revendications 1 à 5, **caractérisés en ce que** le revêtement, qui est obtenu par revêtement avec l'agent de revêtement selon l'invention, est d'une épaisseur de 0,1 à 0,5 µm.

7. Corps moulés munis d'un revêtement selon l'une quelconque des revendications 1 à 6, **caractérisés en ce que** le corps moulé utilisé pour le revêtement est constitué de verre ou d'une matière plastique thermoplastique transparente.

8. Corps moulés munis d'un revêtement selon l'une quelconque des revendications 1 à 7, **caractérisés en ce que** le corps moulé a la structure d'une plaque ou d'une feuille.

9. Utilisation des corps moulés munis d'un revêtement selon l'une quelconque des revendications 1 à 8 comme matériau de vitrification.

10. Utilisation des corps moulés munis de revêtements selon l'une quelconque des revendications 1 à 9 comme constituants de véhicules automobiles, de serres, de stades nautiques, de stades, de gares, de halls d'usine, de revêtements de toit, de parois, de revêtements de luminaires, de vitrifications architecturales, de lumidômes, de dioptres, de lunettes, de graphiques, de panneaux publicitaires, d'affichages, d'emballages ou de plaques pour des déplacements de tout type.
